(19) Europäisches Patentamt
European Patent Office
Office européen des brevets

(11) **EP 1 458 649 B1**

(12) **EUROPÄISCHE PATENTSCHRIFT**

(45) Veröffentlichungstag und Bekanntmachung des Hinweises auf die Patenterteilung:
**21.02.2007  Patentblatt 2007/08**

(21) Anmeldenummer: **01985879.4**

(22) Anmeldetag: **13.12.2001**

(51) Int Cl.:
**C03B 5/24** $^{(2006.01)}$

(86) Internationale Anmeldenummer:
**PCT/EP2001/014665**

(87) Internationale Veröffentlichungsnummer:
**WO 2002/048057 (20.06.2002 Gazette 2002/25)**

(54) **VERFAHREN ZUR MESSUNG UND REGELUNG QUALITÄTSBESTIMMENDER PARAMETER DER RAUHSCHMELZE VON GLASSCHMELZWANNEN**

METHOD FOR MEASUREMENT AND CONTROL OF QUALITY-DETERMINING PARAMETERS FOR THE RAW SMELT IN GLASS FURNACES

PROCEDE DE MESURE ET DE REGULATION DE PARAMETRES DE QUALITE RELATIFS A LA CHARGE BRUTE DE CUVES DE FUSION DU VERRE

(84) Benannte Vertragsstaaten:
**AT BE CH CY DE DK ES FI FR GB GR IE IT LI LU MC NL PT SE TR**

(30) Priorität: **14.12.2000  DE 10065884**
**14.12.2000  DE 10065883**
**14.12.2000  DE 10065882**

(43) Veröffentlichungstag der Anmeldung:
**22.09.2004  Patentblatt 2004/39**

(73) Patentinhaber: **Software & Technologie Glas GmbH Cottbus**
**03050 Cottbus (DE)**

(72) Erfinder:
• **HEGEWALD, Frank**
**03050 Cottbus (DE)**
• **HEELEMANN, Helmut**
**03058 Kiekebusch (DE)**
• **HEMMANN, Peter**
**09599 Freiberg (DE)**

(74) Vertreter: **Kaden, Jutta**
**Eisenführ, Speiser & Partner**
**Anna-Louisa-Karsch-Strasse 2**
**10178 Berlin (DE)**

(56) Entgegenhaltungen:
EP-A- 0 748 773          WO-A-80/02833
GB-A- 2 115 142          GB-A- 2 244 137
US-A- 3 482 956          US-A- 4 963 731

• **PATENT ABSTRACTS OF JAPAN vol. 018, no. 288 (C-1207), 2. Juni 1994 (1994-06-02) & JP 06 056432 A (NIPPON ELECTRIC GLASS CO LTD), 1. März 1994 (1994-03-01)**

EP 1 458 649 B1

## Beschreibung

Die Erfindung betrifft ein Verfahren zur Messung und Regelung qualitätsbestimmender Parameter der Rauhschmelze von Glasschmelzwannen, insbesondere zur einfach sowie fest strukturierten Regelung von Gemengebedeckungsgrad, axialer und radialer Gemengezusammendrängung als vermittelte glasströmungsrelevante und gut regelbare Parameter der Glasbadoberfläche, die optisch gemessen werden. Fest oder manuell vorgegebene Sollwerte optischer Parameter der Glasoberfläche, wie Gemengebedeckung, Batchdrift und Position des Querhotspots, die die Glasströmungsintensität und die Reaktionsraumtrennung von Schmelz- und Läuterteil im Unterofen repräsentieren, ergänzt um einen flinken Folgeregelkreis dazu, der ein Flammenlängeregelkreis ist, sind Wesensmerkmal.

Herkömmliche Ofenregelungsverfahren regeln qualitätsfremde Oberofenparameter oder unklare und zudem bei Glasschmelzwannen mit großer Verzugszeit schlecht regelbare Zusammenhänge.

Kontinuierliches Glasschmelzen ist ein technologisch anspruchsvoller Prozess, der bislang durch lange Verzugszeiten und mehrdeutige Reaktionen der Regelstrecke gekennzeichnet ist. Die direkte Regelung herkömmlich als qualitätssichernd vermuteter Zustandsgrößen des Glasbades scheitert entweder schon an deren Messung oder zu langen Verzugszeiten. Die Regelung eines kleinen (schnelleren) Modellofens als eine Lösung des Problems kennzeichnet die scheinbar aussichtslose Lage. Denn dies kann nur als Verzweiflungslösung angesprochen werden.

Ein Motiv zur Anwendung der automatisierungstechnisch das Niveau bestimmenden Gewölbetemperaturregelung besteht in der kurzen Verzugszeit der Gewölbetemperatur. Trotzdem ist diese Regelung technologisch nachteilig. Sie macht manchmal regelrecht blind, denn nicht das Gewölbe, sondern dessen Konkurrent im Wärmetausch, das Glas, soll geschmolzen werden. Beispielsweise gilt für die überwiegende Anzahl der Störgrößen und Maßnahmen der Feuerführung im Ofen, dass höhere Messwerte der Gewölbetemperatur kälteres Glas bedeuten, auf das es aber ankommt und auf das auch eigentlich gezielt ist. Dieses Regelungsverfahren kann also keinesfalls der alleinig übergeordnete Regelkreis in der Kaskade oder Folge eines fortschrittlichen neuen oder gar automatisierungstechnisch geschlossenen Regelungskonzeptes sein. Es steht im Widerspruch dazu.

Wesentliche systematische Nachteile der flinken Gewölbetemperaturregelung eliminiert eine alte, unter P3610365.9 als BTR-Regelung bekannt gewordene Lösung, "Verfahren zur aktuell technologischen Regelung der Oberofenbeheizung von Glasschmelzwannen", die auch eine Ausführung der Regelung nach Führungsgrößen eines übergeordneten wärmetechnischen Rechenmodells beinhaltet. Wenn aber, wie oben geschildert, bereits ein so relativ übersichtlicher Regelkreis wie die Gewölbetemperatur den Betreiber vielfältig täuschen kann und von der Einsicht in die inneren Prozesszusammenhänge wegführt, wie viel mehr besteht diese Gefahr durch die Regelung von beliebigen Phänomenen, mit allen möglichen Stellgrößen, so wie es Wesensmerkmal von sogenannten Fuzzy-Regelungen ist, z.B. gemäß EP 0 976 685 T1. Dieses Regelungskonzept ist für die zwingend nötige, dauerhaft begleitende analytische Arbeit des Schmelztechnologen nachteilig und kann nur von kurzem Erfolg sein für einen engen, wohlbekannten technologischen Rahmen.

Allen diesen Konzepten ist aber gemeinsam, dass die Reaktionsraumtrennung von Schmelz- und Läuterteil, sowie die qualitätsbestimmende strömungsbedingte Glasmischung im Unterofen und insbesondere das Kreuzstromprinzip weder im Mittelpunkt der Regelung stehen, noch explizit Ziel der Regelung ist. Sie beziehen sich auf Oberofenparameter und sind damit von vornherein für eine direkte und relativ unabhängige Regelung von Unterofenparametern, also für den alleinigen Entstehungsort des Glases, weder vorgesehen noch geeignet.

Ein qualitätssicherndes Regelungskonzept muss wegen der verbleibenden, außerordentlich vielfältigen und dynamischen Randbedingungen, aber logisch klar auf diese Qualitätsparameter zielen, möglichst verständlich sein, soll jedoch auf direkt messbare Parameter transformiert sein, deren Regelbarkeit gut ist. Das heißt: Das Verhältnis von Ausgleichszeit zu Verzugszeit soll bei diesen Streckenparametern möglichst groß sein.

Das Problem besteht darin, dass die entscheidenden Parameter der Glasqualität des Unterofens oder des Glasbades dort, wo Glas entsteht, ursächlich einer Regelung unterworfen werden müssen, um zielgerichtet mit höherer Stabilität und effektiv in Wannenöfen Glas produzieren zu können.

GB 2 115 142 A beschreibt ein Verfahren zum Überwachen relativer Mengen von zwei Materialien, z. B. des Gemenges auf einer Glasschmelze, mit Hilfe eines Bildauswertungsverfahrens. Dieses Bildauswertungsverfahren ist durch den Einsatz von Ofenraumkameras zur optischen Überwachung und visuellen Einschätzung der Konstanz des Gemengegebildes im Rahmen üblicher Wertigkeit des allgemeinen Stabilisierungsdefizits bestimmt. Damit ist zwar eine Überwachung konstanter Flächenverhältnisse möglich, jedoch keine Messung und Regelung einer Verteilung des Gemenges mit realitätsnahen Zahlenwerten und keine indirekte Regelung der Glaszirkulationsströmungen, weil das Verfahren zur Bildauswertung dafür zu ungenau ist und nur die einfache Helligkeit zur Unterscheidung heranzieht.

Es ist deshalb die Aufgabe der Erfindung, ein Verfahren vorzusehen, mit dem die Gewinnung indirekter Messgrößen qualitätsbestimmender Parameter der Rauhschmelze, deren Bewertung und Regelung möglich ist, um den Glasherstellungsprozess in Wannenöfen zu stabilisieren und qualitativ und ökonomisch zu verbessern.

Zur Lösung dieser Aufgabe schlagt die Erfindung das Verfahren gemäß Anspruch 1 vor.

Überraschend wurde gefunden, dass der Gesamtbedeckungsgrad, aber insbesondere die Gemengeverteilung als dessen örtlicher wannenaxialer Gradient oder Differenzquotient - die Batchdrift - hohe Aussagekraft über den Rückstrom hat. Da der Vortrieb der Gemengeschollen vom Einlageimpuls der Einlegemaschinen, der Schubwirkung der Flammen und dem Verteilungsdruck an der Oberfläche abhängt, die im Allgemeinen ähnlich bleiben, oder ähnlich zu halten sind, ist für gleiche Schmelzleistung das Maß der Kompaktheit oder Zusammendrängung der Gemengeschollen ein Maß für die rückstellende Wirkung des oberflächlich zurückströmenden Quellstromes. Im weiteren Sinn wird dabei der, um die Schmelzleistung größere, saugend absinkende Einschmelzstrom als gleichsinnig diese Strömung unterstützende Bedingung aufgefasst. Der oberflächliche Rezirkulationsstrom bestimmt allein das Einschmelzen durch Konvektion und dominiert zugleich Mischungsintensität und Reaktionsraumtrennung von Rauhschmelze und Läuterbereich und ist als Differenzteilstrom besonders signifikant. Man kann ihn kaum berechnen, aber oberflächlich einsehen oder messen. Er eröffnet den ursächlich "tiefen Einblick" dorthin, wo das Glas entsteht und ist kennzeichnend für die Einschmelzdynamik. Für seine Stärke wird, schmelzleistungsabhängig, die Existenz eines Optimum behauptet, dessen Einhaltung oder Abweichung durch das erfindungsgemäße Messverfahren numerisch reproduzierbar bestimmt werden soll. Für die charakteristische Gemengezusammendrängung kann vereinfacht das Newtonsche Strömungsgesetz in seiner allgemeingültigen Form für die Reibungskraft F zwischen einer Platte und einem Fluid angesetzt werden:

$$F = -n*A*dv/dx$$

Dabei ist dv/dx der Geschwindigkeitsgradient der Flüssigkeit mit dem vertikalen Abstand von der Platte. A ist die Berührungsfläche der Platte mit der parallel anströmenden Flüssigkeit (des Glasrezirkulationsrückstromes) und n ist die dynamische Viskosität der Flüssigkeit. Wenn eine Platte des Gemengeteppichs vereinfachend als vollständig aufschwimmend aufgefasst wird, lässt sich das Newtonsche Reibungsgesetz zur Bestimmung der auf die Scholle einwirkenden rückstellenden Reibungskraft durch den Rezirkulationsrückstrom anwenden. Bei Kenntnis der dynamischen Viskosität des Glases im Rückstrom, kann durch einfache Umstellung des Reibungsgesetzes, der Geschwindigkeitsgradient der Strömung bestimmt werden. Für eine wählbare, vorzugsweise stets gleiche Tiefe des Glasbades unter dem Gemenge, kann daraus eine Relativgeschwindigkeit als Kenngröße der Glasrückstromgeschwindigkeit ermittelt werden. Wenn die Kräfte des Gemengevortriebs aus Einlegeimpuls und Hangabtrieb kontinuierlich abnehmend und lokal ins Gleichgewicht gesetzt sind mit der Reibungskraft des oberflächennahen Glasrückstromes, gibt es für jede Schollengröße eine definierte Gleichgewichtsposition in der Vortriebsrichtung des Gemenges, wegen der abnehmenden Schollengröße. Dabei wird der Vorschub des Gemenges für die kleineren, alten Schollen abseits der Einlegemaschinen nach der fallenden Böschung, auch im "Tal" vor dem Quellpunkt nicht Null, weil die wachsende relative Abschmelzmasse der Schollen, mit überwiegend (durch relativ stärkeren, oberflächlichen Festkörperwiderstand in dieser Richtung) rückwärts orientiertem Impuls des Abschmelzens und relativ höherem Schmelzguteintrag in die dazwischen liegenden Spalten, weiter besteht. Zugleich ist bei der gegenstellenden Kraft des Rezirkulationsstromes aus zwei Gründen eine Minderung vorauszusetzen, die ebenfalls den Vortrieb der kleinen, alten Schollen begünstigt: Erstens ist die Geschwindigkeit des Rückstromes aus Bilanzgründen in der Längsachse relativ konstant, aber seine Temperatur sinkt auf dem Rückweg mit dem Beginn der Kontaktierung zu der zunehmend geschlossenen Gemengedecke, durch Einmischung kalter Schmelze und gleichzeitige Strahlungsabschirmung des Stroms unterhalb der Gemengedecke. Dabei steigt seine Viskosität und nach dem Newtonschen Reibungsgesetz die rückstellende Kraft, da die Geschwindigkeit konstant bleibt. Zweitens werden die weit vortreibenden Gemengeschollen auf ihrem Weg Richtung Quellpunkt ständig dünner und nähern sich zunehmend der eingangs getroffenen, vereinfachenden Annahme einer oberflächlich aufliegenden Platte an. Damit wird aber auch ihr Stirnwiderstand, der stark von der Dicke der Scholle abhängt, kleiner. Mindestens diese beiden Argumente begünstigten den relativ großen Vortriebsweg alter Schollen gegen Ende ihrer Existenz.

Für das Messverfahren ist insbesondere die offensichtliche Abwesenheit von starkwirkenden Mechanismen vorteilhaft, die der Einstellung einer Gleichgewichtsposition der Gemengeinseln in Abhängigkeit von ihrer Gestalt entgegenstehen. Darauf beruht wesentlich die Erfolgsaussicht des erfindungsgemäßen Verfahrens, durch die Gemengeverteilung weiterführend eine relative Stärke des Rezirkulationsstromes ermitteln zu können. Trotz der großen Dynamik des Bildes in der Praxis, wurde überraschend gefunden, dass die Positionierung der anteiligen Oberflächen des Gemenges im Allgemeinen, wie in Anbetracht der Komplexität des Prozesses, sehr gut durch einen signifikant linearen Verlauf wiedergegeben wird. Dies gilt für den Abschnitt, der sich an den geschlossenen Gemengeteppich unmittelbar nach der Einlegezone anschließt. Besonders verblüffend und angenehm ist aber, dass der Anstieg dieses linearen Abschnitts überraschend tatsächlich eine Kennzahl für die Stärke des Rezirkulationsrückstromes darstellt. Dabei ist es, insbesondere wegen der Kompliziertheit und Unschärfe einer modellhaften Beschreibung unwesentlich, wie diese Korrelation exakt zu definieren ist. Im Gegenteil: Eine kontinuierliche reproduzierbare Messung, wie sie mit dem erfinderischen Verfahren hier offengelegt ist, bleibt selbst bei höchstem technologischen Niveau unabdingbar.

In den ersten Anwendungen wird die Tangensfunktion (oder der Anstieg) der Gemengebedeckung in der Längsachse der Schmelzwanne (vorzugsweise) entgegen der Hauptströmungsrichtung des Glases unterstellt und genutzt, um die relative Stärke des Rezirkulationsstromes aus dem Gemengebedeckungsbild zu bestimmen. Die Kennzahlerstellung für eine relative Geschwindigkeit ist für den Messzweck oder als Istwert für Regelungen dabei völlig ausreichend. Die Vermessung der Zusammendrängung oder Packungsdichte der Gemengeschollen, ausgedrückt durch den Geradenanstieg, führt bei gleichbleibender Betriebsweise der Einlegemaschinen tatsächlich auch zu einer hohen Übereinstimmung mit der Stärke des vergleichend diagnostisch gemessenen, oberflächlichen Rezirkulationsrückstromes.

Die Aufklärung und logisch zwingende Verknüpfung der dynamisch günstigen Regelparameter zur Qualitätssicherheit ist Wesensbestandteil der Erfindung.

Ein Bildauswertungsverfahren, dass auf der Oberfläche des Glasbades bildpunktweise Helligkeiten unterscheidet und zeilenweise anteilig erfasst, wird zur Unterscheidung von gemengebedeckten und davon freien Flächen in einem frei wählbaren Bildausschnitt der Glasbadoberfläche benutzt. Damit kann die Abnahme des Gemengebedeckungsgrades in Schmelzrichtung ermittelt werden, die im direkten Zusammenhang steht mit der Stärke des oberflächlichen Rezirkulationsstroms und insbesondere seine Stabilität anzeigt. Dies ist der benötigte Messwert einer Istgröße zum Aufbau eines qualitätsrelevanten Regelkreises. Um einen entsprechenden Regelkreis für den Rezirkulationsstrom zu schließen, ist aber außerdem eine geeignete Stellgröße erforderlich. Alte und verhärtete Schranken technologischen Spielraumes müssen dafür überwunden werden, die bei Querflammenwannen insbesondere für die Brennstoffverteilung entlang der Wannenlängsachse bestehen.

Die zumeist empirisch gewählte und fortfolgend meist verbissen konstant gehaltene Brennstoffverteilung bekommt eine neue dynamische Funktion als Stellgröße eines Regelkreises. Der Regelkreis kann in der Reglerhierarchie des Ofens jedoch nicht an der Spitze stehen. Andererseits ist der Erfolg der neuen Regelung aber direkt von sinnvoller Einbindung in die Struktur der Ofenregelung abhängig. Es bietet sich als hierarchisch übergeordnete Regelung die Regelung des gemäß Anspruch 16 optisch ermittelten Gemengebedeckungsgrades gemäß dem Verfahren nach Anspruch 1 an, wobei diese einen Ausgang aufweist, der eine Brennstoff- oder Gesamtenergiebeaufschlagung vorgibt. Auch Brennstoffkonstantregelung oder BTR- Regelung an der Spitze des Regelungskonzepts ist möglich, jedoch weniger leistungsfähig.

Die Einbindung in eine Fuzzy-Regelung oder das Konzept des Oberofentemperaturregelkreises an der Spitze einer Kaskade ist für das Verfahren hingegen absurd. Bei BTR-Regelung ist vorteilhaft, dass die zweifellos guten sicherheitstechnischen Eigenschaften einer Gewölbetemperaturregelung sogar mit besserer Dynamik bewahrt sind.

Bevorzugterweise wird deshalb für Glasschmelzwannen nach Anspruch 2 ein Regelungsverfahren zur Regelung des Gradienten der Gemengebedeckung vorgeschlagen, das in der Kaskade oder als nachfolgender Regler, einen Eingang für den Gesamtbrennstoff oder den fossilen Energieeinsatz hat, als Sollwert einen Gradienten der Gemengebedeckung hat, als Istwert den Gradienten der Gemengebedeckung aus der an sich bekannten Auswertung eines CCD-Kamerabildes zu den Pausenzeiten des Wechselvorganges nutzt und kleine Gradienten der Gemengebedeckung, also weit vorschwimmendes Gemenge in lockerer Anordnung der Gemengeschollen, beantwortet mit Verteilung des Energieeintrages stärker in Richtung Quellpunkt, und der eine Regelantwort hat, die bei eng zusammengedrängtem Gemenge, mit einem Gradienten der Gemengebedeckung, der kleiner ist als der vorgegebene Sollwert, die Energieverteilung bei Querflammenwannen nach Anspruch 7 verstärkt zu Port 1 am Einlegegebiet oder den Port am Quellpunkt verlagert und so den Rezirkulationsstrom verstärkt. Für U- und Querflammenwannen sind die Erhöhung des Bubblingdurchsatzes nach Anspruch 5 und des Elektroboosting nach Anspruch 6 im Quellpunktgebiet gleichsinnige Stellgrößen des Batchdriftregelkreises. Glasströme sind weitgehend laminare Kriechströme, die wie beim Rezirkulationsrückstrom nur in einer Richtung angetrieben, sehr kleine Quermischwirkung haben.

Bekanntermaßen sind neben der Quellpunkttemperatur für die Läuterung gute Reaktionsraumtrennung und gute Mischung durch hohe Scherkräfte im Glas wesentliche Voraussetzung zur Homogenisierung des Glases, also für die Glasqualität.

Effektive Kreuzstrommischung entsteht erst in der Kombination von axialem Rezirkulationsstrom und radialem Rezirkulationsstrom, also insbesondere durch Stärkung der bislang unterbewerteten Quermischkomponente. In der abgestimmten Kombination beider liegt ein wesentlich höheres Potential der Mischwirkung im Unterofen, die Schmelzleistung und Qualitätssicherung bedeutet. Erfindungsgemäß wird dazu eine Folgeregelung vorgeschlagen, deren Führungsregler als Istwert das numerische Signal eines optischen Bildauswertesystems "optical melting control (OMC)-Systems", hat, wobei die Aussage der Messung die Lage des Schwerpunktes mindestens eines lokalen Hotspots innerhalb eines von der Flamme auf der Glasbadoberfläche erzeugten Temperaturfeldes in der Wannenquerachse ist, deren Sollwert eine Länge ist, die die Lage eines Maximums eines Temperaturfeldes vorzugsweise bei der Hälfte der Wannenquerachse ist, dessen Ausgang eine Führungsgröße der Flammenlänge ist, die als Istwert des nachfolgenden Reglers, die mittels OMC vermessene Lage eines Wärmequellenschwerpunktes als Ausdruck der Flammenlänge hat und dass der Folgeregler einen Ausgang hat, der eine Stellgröße zur Änderung der Flammenlänge durch Stellung eines Drallkörpers oder Stellung des Zerstäubergasdrucks oder die Stellung der Lastverteilung eines Ports ist. Bei Querflammenwannen wird dabei mittels OMC durch den Führungsregler zunächst ein Schwerpunkt des Wärmeeintrags in das Glasbad an einem flammenaxialen Temperaturfeld auf der Glasbadoberfläche vorzugsweise für jede Flammenachse bestimmt. Bei regenerativbeheizten Wannen geschieht dies vorzugsweise in jeder Wechselpause. Dieser Wärmeschwerpunkt der Flammenspur wird im Führungsregler mit dem inhaltlich gleichsinnigen Sollwert verglichen, der vorzugsweise die Hälfte der Wannenbreite ist. Bei Übereinstimmung von Sollwert und Istwert bestehen die besten Bedingungen zur Stärkung der Querströmung, denn der lokale Hotspot, insbesondere dessen Schwerpunkt der betreffenden Flamme, liegt nahe der Wannenlängsachse in der Wannenmitte und stärkt somit auch den Quellpunkt, welcher den globalen Hotspot des Glasbades darstellt.

Ein bevorzugtes Merkmal das erfindungsgemäßen Verfahren ist, dass ebenso die Querströmung des Glases durch das Verfahren gemäß Anspruch 3 forciert und so eine starke Kreuzstrommischung gesichert wird. Dabei wird der Schwerpunkt des Wärmeeintrags in den Wechselpausen örtlich bestimmt und einem Sollwert nachgeführt, der in der Wannenlängsachse liegt.

Dieser Sollwert des Führungsreglers hat somit einen festen Optimalwert, der allenfalls durch den sicherheitsrelevanten Zwang von Störgrößen zu modifizieren ist. Der vorzugsweise PID-modifizierte Ausgang des Führungsreglers ist im übertragenen Sinn eine Führungsgröße der Flammenlänge für den nachfolgenden Regler. Er ist die geführte Korrektur der Lage eines Flammenwärmeschwerpunktes, die als Istwert dem nachfolgenden Regler durch ein OMC zugeführt wird. Das führt dazu, dass bei zu naher Lage des resultierenden lokalen Glasbadhotspots an der Flammenwurzel und damit nicht in der erwünschten Mitte der Wannenquerachse, die Führungsgröße der Flammenlänge durch den Führungsregler, (allerdings besonders langsam) erhöht wird. Der flinke Folgeregler vergleicht den relativ flinken Istwert der Flammenlänge mit der vom Führungsregler vorgegebenen Führungsgröße ebenfalls vorzugsweise als PID-Regler und hat einen Stellausgang, der die Flammenlänge (oder präziser den Schwerpunkt also den lokalen Hotspot der-Flamme) stellt. Stellglied sind dabei für ölbeheizte Wannen das Reduzierstellventil des Zerstäubergasdrucks und für Brennstoffbefeuerung allgemein, die Verteilerventile zur Aufteilung des Brennstoffs an einem Port.
Dabei sind konvergierend voreingestellte Flammen vorteilhaft besonders stellsensibel. Bei Gasbrennern sind die Stellung von turbulenzintensivierenden Drallkörpern oder die Stellung des Luftstellventils einer an sich bekannten, vorzugsweise brennermittigen Treiblufteinspeisung, vorzugsweise Stellgrößen des nachfolgenden Reglers. Die Flammenlänge ist allerdings innerhalb des Ofens nicht unbegrenzt lang einstellbar. Wesentlich sind sicherheitstechnische Belange, die einer sehr langen Flamme entgegenstehen. Insbesondere darf der abgasseitig abziehende Port nicht durch Überhitzung gefährdet werden. Zum Einen wird deshalb mit einem OMC, durch einen an sich bekannten Umgebungsvergleich, aber neuartig an den Kanten der Brennermäuler, ein Grenzwert der Überhitzung als Temperaturgradient festgelegt und vermessen. Zum Anderen kann gegebenenfalls auch nach subjektiven Betreiberanforderungen die maximale Flammenlänge als Ort des sichtbaren Flammenendes, die als Ausbrandlänge der Flamme bezeichnet wird, als Grenzwert festgelegt und mittels OMC kontinuierlich vermessen werden. Beide Vergleiche sind alternative Störgrößenaufschaltungen des Führungsreglers, die dessen Sollwert bei Grenzwertüberschreitung subtrahierend aufgeschaltet werden, so dass die Sollwertlage des Hotspots auf dem Glas zur feuerführenden Seite hin aus der Mittellage heraus verkürzt wird. Eine Verschiebung über die Mittellage hinaus, ist nicht vorgesehen.

Eine andere Lösung dieses Problems besteht darin, einen Vergleich der Lichtausbeute aus dem Integrationsprodukt von Helligkeit und Flächenausfüllung von vorzugsweise drei seitenwandparallelen und symmetrischen Bildstreifen, im Zeitraum abgeglichener Sollwerte der Brennstoffzufuhr, zu den Brennern zu führen. Dabei wird ein Grenzwert des Anteils des abzugsnahen Bildstreifens an der Summe der drei Streifen festgelegt. Die Einbindung der Grenzwertüberschreitung erfolgt dann wie oben angegeben.

Nur in der vorzugsweisen Sollwertposition ist eine kontinuierliche Quer-Quellstromposition seitenunabhängig möglich und wird geregelt, indem die Flammenlänge so nachgeführt und nach einem thermischen Schwerpunkt ihres Bildes nach Anspruch 4 aktuell und in der Feuerperiode so geregelt wird, dass die flammenaxialen Hotspots nahe der idealen Position bei der Wannenlängsachse liegen, wobei der Flammenlängenregelkreis nach Anspruch 10 vom Regelkreis nach Anspruch 3 geführt ist. Die Flammenlänge wird nach Anspruch 8 bei Ölbrennern durch Senkung des Zerstäubergasdrucks länger gestellt. Die unsymmetrische Verteilung des Brennstoffs auf die Brenner innerhalb eines Ports nach Anspruch 9 ist ein geeignetes erfindungsgemäßes Mittel zur Verlängerung von Gas- und Ölflammen, insbesondere wenn die Achsen der Flammen sich schneiden oder konvergieren. Um der Gefahr zu langer Flammen zu begegnen, ist nach Anspruch 11 der Führungsgröße der Flammenlänge eine Störgröße aufgeschaltet, die nach Anspruch 23 eine optische Messgröße ist, die eine lokale Überhitzung am Ende der Flamme, insbesondere an den Kanten des abgasabziehenden Ports in der Wechselpause überwacht. Die optische Messung ist aber insbesondere nach Anspruch 12 auf die Glasbadoberfläche gerichtet. Die Grenzen des Auswertungsbildausschnittes werden vorzugsweise manuell so festgelegt, dass die komplett durch die Ofenraumkamera einsehbare Glasoberfläche einbezogen ist. Bubblingflecken oder Verschmutzungen am Kameraschauloch, die in das Bild hineinragen, werden aber als Ausschnitt von der Auswertung herausgehalten. Zur Erkennung des Verursachers der Hotspots auf der Glasoberfläche und zur feueraktuellen Regelung der Flammenlänge wird nach Anspruch 13 jedem Port eine Flammenachse zugeordnet, die im Auswertungsbild vorzugsweise nicht sichtbar gemacht ist.

Gemengebedeckung und Batchdrift nach Anspruch 1 und 2 sollen möglichst keine Trapezverzerrung aufweisen und realitätsnahe Zahlenwerte nach Anspruch 22 sein. Deshalb wird jeder Bildpunkt nach Anspruch 14 in der Wichtung quadratisch zu seinem Abstand von der Bildaufnahme korrigiert. Nach Anspruch 15 wird eine seitliche Verzerrung zugelassen, die eine geringere Wertigkeit seitlich liegenden Gemenges zur Folge hat. Das ist wegen der Wunschbildsituation V-förmiger Einlage für die Regelung nach Anspruch 2 ein Vorteil und darüber hinaus algorithmisch besonders einfach.

Nach Anspruch 17 wird die Gemengezusammendrängung als Anstieg der Gemengebedeckung entgegen der Entnahmeströmungsrichtung des Glases vorzugsweise auch graphisch dargestellt, wobei der numerisch bestimmte linearisierte Anstieg aber der Eingangs-Istwert des Regelungsverfahrens nach Anspruch 2 ist. Die kriterielle Unterscheidung sowohl bei Grautönen nach Anspruch17, als auch bei Farbintensitätsvergleich nach Anspruch 20, als Gemenge oder Glas, wird durch den Vergleich mit jeweils zwei vorhandenen Normativen der besonders heißen ersten und besonders kalten letzten Zeilen der langfristig dynamisch nach Anspruch 18 für Helligkeiten und nach Anspruch 21 für Farben der wechselnden thermischen Ofensituation angepasst. Dabei wird der kriterielle Schwellwert der Helligkeit durch die Intensität insbesondere der Farben rot, grün und blau ersetzt, wobei kleine Beträge der Farbe rot einschmelzendes Gemenge und/oder kaltes Gemenge anzeigen und kleine Werte der Farbe grün kaltes Gemenge anzeigen. "Dunkel" wird ersetzt durch rot nahe Null und grün klein, aber nicht nahe Null, und "hell" wird ersetzt durch einen vorhergehenden Vergleich, wobei blau sehr groß, rot und grün klein oder mittelgroß, aber nicht nahe Null sei. Für die Bildauswertung ist es vorteilhaft, nach Anspruch 19 die Blickrichtung in die Längsachse der Wanne zu legen und somit die Bildzeilen in Querrichtung der Wanne anzuordnen. Da die Richtung des nach Anspruch 2 zu regelnden und nach Anspruch 17 zu messenden Rezirkulationsstromes gegen die Entnahmeströmung weist, wird den Zeilen eine Nummerierung in dieser Richtung zugewiesen.

Die kommerziellen Vorteile des Verfahrens gegenüber dem bekannten Stand der Technik liegen in der höheren Qualitätssicherheit bei der Glasschmelze von Massengläsern, einer höheren verfügbaren spezifischen Schmelzleistung bei vergleichbarer Qualität, gesenktem Energieverbrauch, gegebenenfalls erhöhter Anlagenstandzeit. Bei der Mehrzahl der Anwendungen ist eine Senkung der Abgas- NOx- Emission zu erwarten.

Die Erfindung wird nachfolgend anhand von Ausführungsbeispielen erläutert. Die Figuren zeigen:

Fig. 1     eine schematische Darstellung des erfindungsgemäßen Regelkreises für die Intensitätsregelung des oberflächennahen Hauptrezirkulationsstrom es des Glases;

Fig. 2     das Messergebnis eines OMC-Meßsystems, das den Eingang des erfindungsgemäßen Batchdrift-Regelkreises bildet;

Fig. 3     Gutwertkurve der OMC-Messung gemäß Fig. 2;

Fig. 4     Darstellung der Stellhandlung an der Regelstrecke als Veränderung der Flammengröße an einer Querflammenwanne;

Fig. 5     Darstellung der Wärmelast der Läuterzone in der Ausgangssituation und nachgeregelt;

Fig. 6     eine schematische Darstellung des erfindungsgemäßen Regelkreises für die Intensitätsregelung des oberflächennahen Querrezirkulationsstromes des Glases.

Anhand eines ersten Ausführungsbeispiels soll zunächst die Realisierung des Verfahrens nach Anspruch 2 näher erläutert werden. Eine Floatglaswanne wird überwiegend in Brennstoffautomatikbetrieb nach einem technologischen Regime gefahren, bei dem die Sollwertvorgabe der Gesamtbeaufschlagung mit Brennstoff in Abhängigkeit von Schmelzleistung und Scherbenanteil erfolgt. Speziell wird dies durch einen an sich als BTR (1) bekannt gewordenen Regler realisiert, der den Vorteil der parallelen Gewölbetemperaturüberwachung hat. Das vom Prinzip her an sich sehr einfache Verfahren der Gemengebedeckungsregelung nach Anspruch 1 an der Spitze der Reglerhierarchie ist an diesem Ofen noch in zeit- und versuchsweiser open-loop-Erprobung. Den im Beispiel angewendeten BTR ist ein herkömmlicher PID-Regler für den Gesamtbrennstoff nachgeordnet. Alle Ports sind mit Lambdaregelung ausgestattet. Jeder Port hat eine separate Sollwertvorgabe für die Luftverhältniszahl Lambda. Damit ist ausreichend gewährleistet, dass Wärmeländerungen an einzelnen Ports gut mit deren Brennstoffbeaufschlagung korreliert sind und nicht sogar gegenläufig sind. Die Verteilung des Brennstoffs für die einzelnen Ports, als Anteil der Gesamtbrennstoffbeaufschlagung ist den Sollwertgebern einer Brennstoffverteilung (2) hinterlegt, die über ein Prozessleitsystem manuell eingestellt werden. Die Oberfläche der Schmelze wird mit einer herkömmlichen Ofenraumkamera überwacht und der Einschmelzgradient des Gemenges in der Wannenlängsachse wird mit dem Verfahren nach Anspruch 17 gemessen, wobei die Messeinrichtung als optical melting-control-System (OMC) (4) bezeichnet ist. Der Anstieg der Gemengebedeckung in der Schmelzzone im Bereich von nahe 0 bis nahe 100% Gemengebedeckung, wird vom OMC zeilenweise in der Querachse gemessen und in Richtung des oberflächlichen Rezirkulationsstromes mittels einer einfach linearen Approximation bestimmt. Deren Anstieg ist der Istwert des erfindungsgemäßen Batchdrift-Regelkreises. Aus langfristig vergleichender Beobachtung des Betreibers von Qualität und OMC-Ausgang in Form des numerischen Anstiegs der Gemengezusammendrängung ist für die Schmelzleistung ein Gutwert des Anstiegs ermittelt worden. Dies ist der manuell vorgegebene Sollwert des Batchdrift-reglers (3).

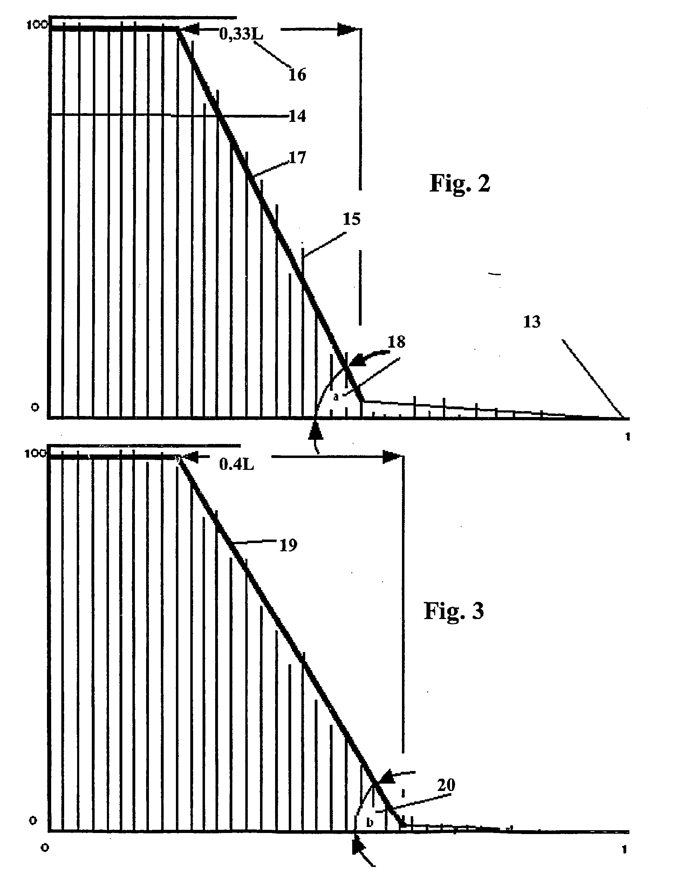

In Figur 2 ist das Messergebnis eines OMC-Meßsystems abgebildet, das den Eingang des erfindungsgemäßen Batchdrift- Regelkreises (3) bildet. Darin ist die Wannenlänge als Abszisse (13) in Schmelzflussrichtung dargestellt. Weiterhin ist die Gemengebedeckung in Querrichtung als Ordinate (14) dargestellt. Obwohl durch das System jede Bildzeile einzeln vermessen wird, ist zur Glättung der Bildzeilenstreuung jeweils ein Mittelwert der Gemengebedeckung von mehreren Zeilen gebildet worden und als Säule dargestellt, die die prozentuale Gemengebedeckung einer Bildzeilengruppe (15) ist. Mittels einfach linearer Regression wird der Hauptast des Anstiegs der Gemengebedeckung als Haupt-Approximationsgerade der Gemengebedeckung in der Schmelzzone (17) bestimmt. Die Länge deren Ankathete ist die aktuelle anteilige Länge der Schmelzzone (16). Für die Regelung wird der numerische Anstieg als Eingangssignal genutzt, der der Quotient von Gegenkathete und Ankathete ist. Im Beispiel beträgt die Gegenkathete 0,92, da der Anstieg ermittelt wurde für den Bereich von 5% bis 97% Gemengebedeckung. D.h., der Betrag 1 = 100% wurde gemindert um 0,005 und 0,3. Der Betrag der Ankathete ist 0,33. Der Istwert der Regelstrecke beträgt damit: 2,79. Der Anstiegswinkel der approximierten Gemengezusammendrängung (18) ist der Tangens dieses Quotienten und hat eher anschaulichen Wert. Auch hierfür wird aber zweckmäßig für die Ankathete deren Betrag genutzt. Inhaltlich ist dies dadurch begründet, dass der oberflächliche Rezirkulationsstrom, dessen Wirkung hier bestimmt wird, die Gegenrichtung zur Abszisse (13) aufweist, aber aus Gründen der Anschaulichkeit die Wannenlänge, wie üblich in Flussrichtung dargestellt ist.

Figur 3 zeigt die zugehörige, hinterlegte Gutwertkurve der OMC-Messung. Die Haupt-Approximationsgerade einer Gutwerthinterlegung (19) zeigt gute Korrelation zu den Einzelwerten bis zu 2% Gemengebedeckung. Der qualitätssichernde Anstiegswinkel der Gemengezusammendrängung einer Gutwerthinterlegung (20) ist flacher als der Istwert. Für das Regelungsverfahren ist aber der digitale Anstieg wesentlich. Dieser ist im Gutwert, der für die gleiche Tonnage den Istwert des Batchdrift- Regelkreises bildet: 2,35. Die Regelabweichung beträgt -0,44 und das Beispiel zeigt damit, dass die Regelabweichung vorteilhaft zu großen Werten hin, stark gespreizt ist.

Die Brennstoffverteilung wird im Beispiel ausschließlich zwischen Port 2 plus Port 3, alternativ zu Port 5, der der "Quellpunktport" ist, variiert. Die Regelabweichung wird mit PID- Charakteristik im Batchdrift-Regler bewertet und als Stellgröße dem Brennstoffverteilerbaustein (2) zugeführt. Dieser vermindert den Anteil des Brennstoffs für den "Quellpunktport", den Port 5, wobei der Brennstoffverteiler zugleich den Anteil für die Summe Port 2 und 3 um den gleichen Betrag gleichverteilt anhebt. Dessen Funktion ist es, dabei die Summe der Anteile Port 2+3+5 konstant zu halten. Der Reglerausgang des erfindungsgemäßen Regelkreises (3) ist damit Eingang des Brennstoffverteilerbausteins (2) zur Sollwertführung im Sinne einer Korrektur der Handvorgabe. Im Beispiel ist der zulässige Bereich der Sollwertkorrektur gestellt eingeschränkt auf je 3% vom Gesamtbrennstoffaufkommen. Beträge der Stellgröße als Ausgang des Batchdrift-Reglers (3), die darüber hinaus gehen, werden nicht realisiert, aber angezeigt. Sie erlangen zugleich den Status eines Bedienvorschlags für manuellen Eingriff und sind dazu farblich auf dem Bedienmonitor hervorgehoben. Die Gesamtbrennstoffvorgabe als Sollwert Brennstoff ist Ausgang des an sich bekannten, übergeordneten Brennstoff-Temperaturreglers (BTR) (1) und Eingang des an sich bekannten Brennstofflreglers. Der BTR-Regler (1) gibt charakteristisch über relativ lange Zeiten gleiche Sollwerte des Gesamtbrennstoffs vor, wodurch eine systematische oder gekoppelte Überlagerung von Stellhandlungen durch Brennstofländerungen vermieden ist. Dem Brennstofflregler ist im Beispiel der Brennstoffverteilerbaustein (2) nachgeordnet. Alternativ empfiehlt es sich, den geführten Sollwerteingang des Brennstofflreglers als Eingang des Brennstoffverteilerbausteins (2) zu nutzen.

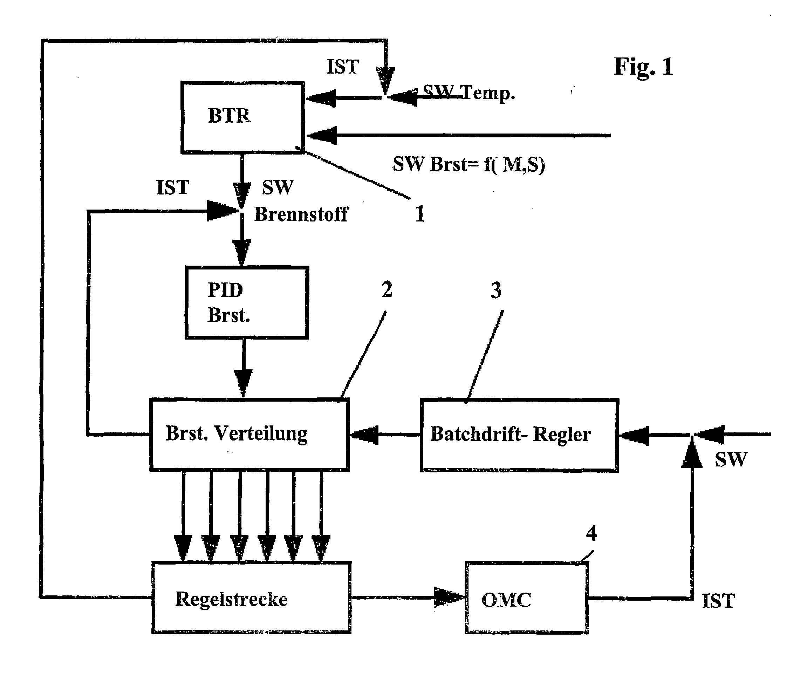

Nicht dargestellt sind in Figur 1 die dem Brennstoffverteiler in der realen Anlage nachgeordneten Brennstoffeinzelregler. Die Einstellung der dynamischen Reglerparameter erfolgt im Rahmen fachmännischen Handelns. Im Beispiel wurde, wegen der nur alle 20 Minuten jeweils zur Wechselpause einzeln auflaufenden Messwerte des OMC, zunächst der Regler als P-Regler betrieben, dann der I-Anteil aktiv benutzt und fortfolgend vorsichtig der differentielle Anteil erhöht. Die Unterschreitung von Verzugszeiten unterhalb von 2 Stunden ist unzweckmäßig. Die integrierende Wiederholung unterhalb von 1h ist ebenso unzweckmäßig (I-Anteil).

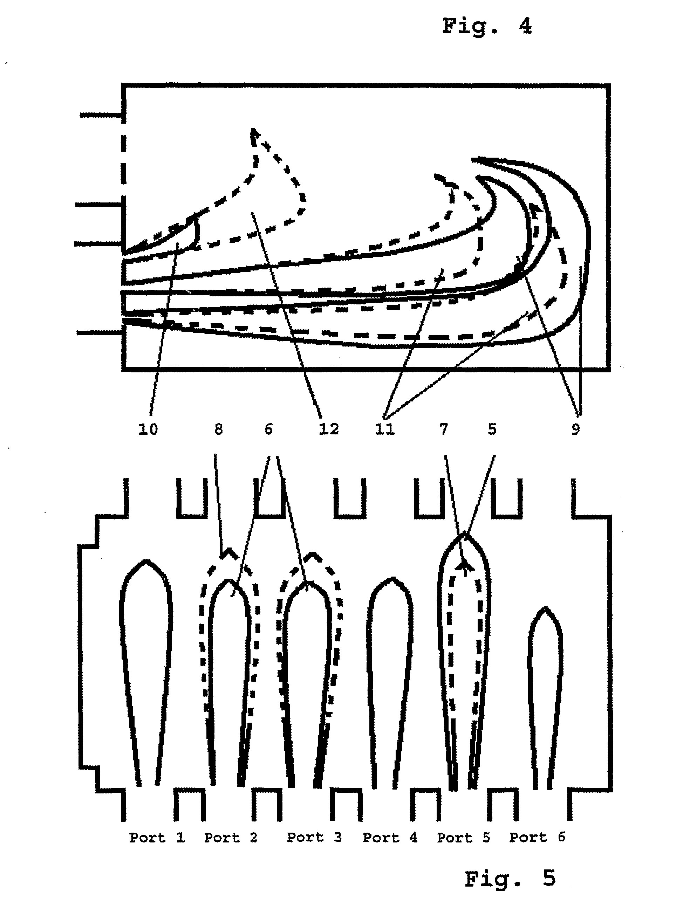

In den Figuren 4 und 5 ist als Sinnfälligkeitsdarstellung die Stellhandlung an der Regelstrecke als Veränderung der Flammengröße veranschaulicht. Die Flammengrößendarstellung ist dabei ersatzweise anschaulich für die Brennstoffbeaufschlagung des betreffenden Ports oder des Brenners angewendet. Figur 4 zeigt dabei die Stellhandlung an einer Querflammenwanne als Reaktion des Batchdrift-Reglers auf die Regelabweichung nach dem oben genannten Beispiel bei zu gedrängter Gemengelage in der Einschmelzzone. Dabei symbolisiert die Größe der fünften Flamme mit voll ausgezogenen Konturen die relative Wärmelast am Quellpunkt in der Ausgangssituation (5). Diese wird als Stellhandlung des Batchdrift- Reglers gemindert, um den Quellpunkt zu schwächen. Die unterbrochene Kontur der Flamme zeigt symbolisch die relative Wärmelast am Quellpunkt nachgeregelt (7). Die Wärmelast an Port 2 und 3 in der Ausgangssituation (6) wird durch die Fläche der zweiten und dritten Flamme symbolisiert. Die Stellbedingung des Brennstoffverteilerbausteins ist es, die Summe des Brennstoffs aus Port 2+3+5 konstant zu halten. Sie hat zur Folge, dass die Wärmelast an Port 2 nachgeregelt (8), ebenso wie an Port 3 größer ist, als die in der Ausgangssituation.

Für eine U-Flammenwanne wird der Gedanke der Regelung von ganzen Brennerports übertragen auf einzelne Brenner. Figur 5 zeigt die Wärmelast der Läuterzone in der Ausgangssituation (9) und die Wärmelast der Läuterzone nachgeregelt (11), symbolisch als verringerte Flammengrößen. Die Folge über den Brennstoffverteilerbaustein für die, quer über das Einlegegebiet und die Schmelzzone angeordnete dritte Flamme, ist symbolisiert mit dem Wandel der Flammengrößen von der separaten Wärmelast der Schmelzzone in der Ausgangssituation (10), hin zu der separaten Wärmelast der Schmelzzone nachgeregelt (12).

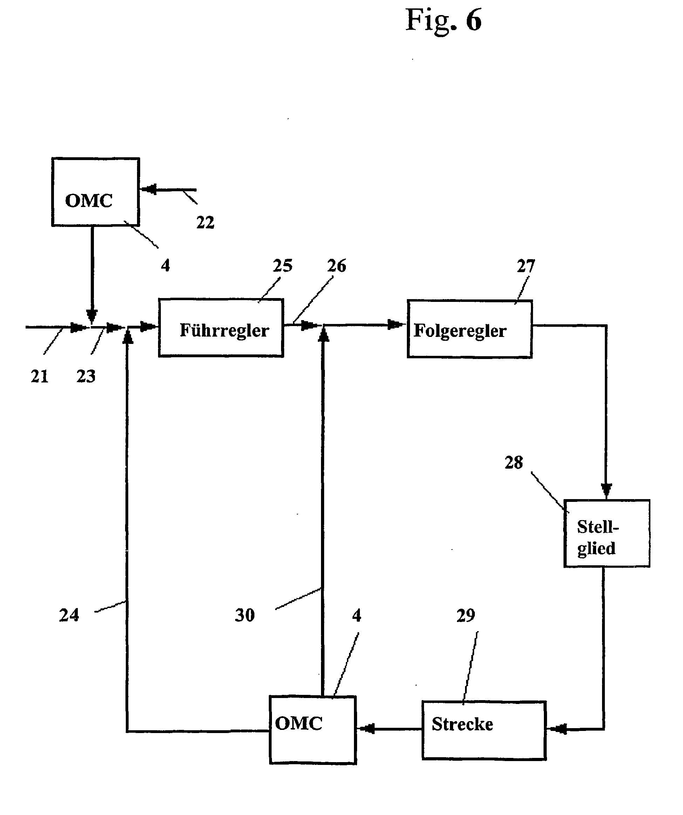

Zur Realisierung der Verfahren nach Anspruch 3 und 4 misst das System zur optischen Kontrolle des Glasschmelzens "optical-melting-control-system" (OMC) (4) auf dem Glasbad im Beispiel die Farbintensitäten blau, grün und rot. Es werden Temperaturfelder mit Isothermen eingegrenzt. Dabei sind störende Kaltgebiete (Gemengeinseln) umbewertet. Innerhalb einer Isotherme wird ein Hotspot auf der Glasoberfläche nach Anspruch 3 und 4 umschrieben und ermittelt. Das geschieht bei regenerativen Wannen vorzugsweise innerhalb der Wechselpause des Feuers. Der geometrische Mittelpunkt des Hotspots wird bestimmt und einem Bildpunkt zugeordnet. Die Bildzeilen sind durch die Vorwahl einer Flammenachse nach Anspruch 13 einem Brennerport zugeordnet. Damit ist der verursachende Brennerport bestimmt. Die Lage des geometrischen Mittelpunktes des flammenaxialen Temperaturfeldes auf dem Glas wird als der Istwert des Führungsreglers (25) in Figur 6 als flammenaxiale Position des Schwerpunktes eines Hotspot-Temperaturfeldes auf dem Glasbad (24) bewertet und ist konkret dessen Istposition als Längenanteil an der Querachse. Aus der fixen Vogelperspektive der Ofenraumkamera in der Mittelachse der Wanne, bilden die mittleren Bildpunkte des symmetrischen Bildausschnitts, die Mittelachse auf dem Glasbad. Dort soll der aktuelle Schwerpunkt der Wärmesenke für jede Flamme liegen. Das ist nach Anspruch 3 die Sollposition des Schwerpunkts eines flammenaxialen Temperaturfeldes der Wärmesenke (21), der vorzugsweise fest eingestellte Sollwert des Führungsreglers (25), der eine halbe Wannenbreite beträgt. Im Beispiel besteht eine Regelabweichung. Der Istwert als flammenaxiale Position des Schwerpunktes eines Hostspot-Temperaturfeldes auf dem Glasbad (24) liegt, von der ehemaligen, gerade abgeschalteten Flammenwurzel aus gesehen, im Beispiel vor dem Sollwert. Das heißt, die Flamme hat offensichtlich ihre Wärme zu früh entbunden, um, wie gewünscht, in der Mittelachse der Wanne innerhalb eines flammenaxialen Temperaturfeldes einen Schwerpunkt der Wärmebelastung zu bilden und damit den aufsteigenden Querstrom in zentraler Mittellage anzutreiben. Die Flamme ist für dieses Ziel etwas zu kurz eingestellt. Der Führungsregler oder Wärmesenkenregler (25) verändert die Führungsgröße Flammenlänge (26) des Folgereglers (27), anschaulich des flinken Flammenlängereglers (27), zu größerer Flammenlänge hin. Diese Führungsgröße wird mit erneutem Einsetzen des Feuers dieser Seite aktiv und der Folgeregler (27) regelt nun aktuell eine "längere" Flamme. Diese Länge der Flamme wird ebenfalls mittels OMC (4), und zwar ganz ähnlich, aber in der Feuerperiode und längerfristig kontinuierlich, vermessen. Es wird ein Schwerpunkt der Flamme innerhalb einer Isotherme gebildet, deren relative Länge von der Wannenbreite bestimmt, vereinfachend als Istwert der Flammenlänge (30) bezeichnet wird. Die Flamme wird einem Port zugeordnet und der Regelkreis wird dadurch geschlossen, dass die zu kurze Flamme verlängert wird durch eine Stellhandlung des Folgereglers (27), die dem Stellglied der Flammenlänge (28), aufgeschaltet wird. Im Beispiel wird nach Anspruch 8 der Zerstäubergasdruck der Ölbrenner an diesem Port gesenkt. Das Bild an der Regelstrecke (29) ändert sich in Form der Glasbadoberflächentemperaturverteilung und der Wandtemperaturverteüung. Diese sind im Regelkreis Eingang der OMC-Bildverarbeitung. Der Regler (27) arbeitet während der Zeit der Feuerperiode auf der Grundlage der für die halbe Feuerperiode geänderten Führungsgröße autonom weiter und regelt selbständig alle Flammenlängenänderungen aus Streckenänderungen in diesem Zeitraum nach. Es sei nur an Störungen aus Änderungen der Luftbeaufschlagung des Ports oder Herdraumdruckschwankungen erinnert, um die Forderung nach Aktualität des Reglers zu veranschaulichen. Im nächsten Zyklus ist beispielsweise eine Übereinstimmung von hellster Stelle auf dem Glasbad und Wannenmittelachse zu erkennen. In diesem Fall wird der Führungsregler (25) keine Änderung der Führungsgröße des Folgereglers (27) veranlassen und dieser arbeitet im nächsten Zyklus mit der alten Führungsgröße der Flammenlänge. Der Regelkreis der Flammenlänge kann auch abgekoppelt vom Führungsregler (25), dann aber allein zur Stabilisierung einer z.B. subjektiv erwünschten Flammenlänge betrieben werden. Die in kompletter Konfiguration vom Führungsregler (25) ausgegebene Führungsgröße avanciert dann zum Sollwert des Flammenreglers (27). Im Beispiel ist die Regelung nur einer Flammenlänge nach Anspruch 4 zur Einregelung des zugehörigen Hotspots in die Mittellage der Wanne nach Anspruch 3 mittels des Verfahrens nach Anspruch 10 geschildert. Insbesondere für Querflammenwannen sind mehrere solche Regelkreise angeordnet, die aber in der Regel gemeinsam ausschließlich ein OMC-System (4) benutzen.

Der Erfolg des Verfahrens wird auffällig an einer stärker V-förmigen Gestaltung des Einlagebildes orientiert und kann als solches durch das vorhandene OMC (4), unabhängig von der vorliegenden Erfindung, numerisch relativ bestimmt werden. Nach Anspruch 2 soll der abziehende Port eines gegenüberliegenden flammenlängengeregelten Ports an einer Querflammenwanne durch Grenzlängenüberwachung nach Anspruch 11 vor wesentlichen Überhitzungen geschützt werden. Es ist die Störgröße Kantenüberhitzung des Brennermauls (22) zu vermeiden. Nach Anspruch 23 wird eine Bildauswertung mittels OMC in der Feuerpause unmittelbar nach "Feuer aus" für einen manuell ausgewählten Bildausschnitt an der Oberofenseitenwand, der sich in der Nähe des betreffenden Ports befindet, aber diesen selbst ausschließt, ausgeführt. Im Ergebnis wird für die Fläche eine Verteilung der Intensitäten von blau, grün und gelb bestimmt.

Nahezu zeitgleich wird dasselbe unter Einschluss der Portkanten ausgeführt. Eine als kritisch eingestufte relative Blauverschiebung bei Einschluss der Brennermaulkanten, die von Hand eingestellt ist, gibt über das OMC (4) ein proportionales Signal der anteiligen Blauverschiebung aus, dass vom handeingestellten Sollwert des Führungsreglers, der Sollposition des Schwerpunkts der flammenaxialen Wärmesenke (21), subtrahiert wird. Das Ergebnis ist der sicherheitskorrigierte Sollwert des Wärmesenkenreglers (23) Dieser Sollwert ist von der idealen Mittellage zurückverlegt, zu Gunsten der thermischen Schonung des abziehenden Ports.

Bei U- Flammenwannen sind die Brennstoffverteilung der Brenner des feuernden Ports und eine unterstützende Luftverteilung am Port, die von der Beschreibung für die Querflammenwanne im Rahmen ingenieurmäßigen Handelns sinngemäß zu übertragenden, leicht abweichenden Stellgrößen .

## Patentansprüche

1. Verfahren zur Regelung qualitätsbestimmender Parameter der Rauhschmelze von Glasschmelzwannen, **gekennzeichnet durch** die Regelung des optisch gemessenen Anteils und der Verteilung der Gemengebedeckung der Glasbadoberfläche als Istwerteingang mit einem vorgegebenen Gemengebedeckungsgrad als Sollwert und der Gesamtenergiebeaufschlagung und/oder Energieverteilung als Ausgang.

2. Verfahren zur Regelung qualitätsbestimmender Parameter der Rauhschmelze von Glasschmelzwannen nach Anspruch 1, **gekennzeichnet durch** eine über die axiale Zurückdrängung von schollenweise vortreibendem Gemenge vermittelte Intensitätsregelung des oberflächennahen Hauptrezirkulationsrückstromes des Glases, wobei der optisch gemessene Gradient des Gemengebedeckungsgrades in Richtung der Wannenlängsachse einen Istwert für einen Batchdriftregelkreis darstellt, der mit einem vorgegebenen Gutwert des numerischen Anstiegs der Gemengebedeckung verglichen wird, der als Sollwert des Batchdriftregelkreises dient, wobei der Batchdriftregelkreis einem Gesamtbrennstoffregelkreis untergeordnet ist und als Ausgang die Führungsgröße eines nachfolgenden Regelkreises hat, der die Glasströmung durch gezielten Wärmeeintrag im Unterofen indirekt stellt.

3. Verfahren zur Regelung qualitätsbestimmender Parameter der Rauhschmelze von Glasschmelzwannen nach Anspruch 1, die bei Querflammen-Glasschmelzwannen über eine seitliche V-förmige Zurückdrängung von schollenweise vortreibendem Gemenge kenntlich ist, **gekennzeichnet durch** eine Intensitätsregelung des oberflächennahen Querrezirkulationsstromes des Glases, wobei die flammenaxiale Lage des optisch gemessenen Schwerpunktes eines lokalen Hotspots in einer Flammenspur auf der Glasoberfläche geregelt wird, die Istwerteingang eines Feuerführungsregelkreises ist, dessen bevorzugter Sollwert die Mittellage des lokalen Hotspots der Flammenspur in Wannenquerrichtung ist und dessen Ausgang die Führungsgröße eines nachfolgenden Regelkreises ist, der die Flammenlänge stellt.

4. Verfahren zur Regelung qualitätsbestimmender Parameter der Rauhschmelze von Glasschmelzwannen nach Anspruch 3, **gekennzeichnet durch** die Regelung eines Istwertes, der die optisch gemessene Lage des Schwerpunktes eines Flammentemperaturfeldes des jeweiligen Brennluftports ist, wobei der Regelkreis ein Flammenlängeregelkreis mit einem Sollwert ist, der die Flammenhotspotposition in der Flammenachse ist.

5. Verfahren zur Regelung qualitätsbestimmender Parameter der Rauhschmelze von Glasschmelzwannen nach Anspruch 2, **dadurch gekennzeichnet, dass** ein nachgeordneter Regelkreis die Glasströmung im Unterofen durch eine gleichsinnige Stellhandlung des quellpunktnahen Bubbling stellt.

6. Verfahren zur Regelung qualitätsbestimmender Parameter der Rauhschmelze von Glasschmelzwannen nach Anspruch 2, **dadurch gekennzeichnet, dass** ein nachgeordneter Regelkreis die Glasströmung im Unterofen durch eine gleichsinnige Stellhandlung der quellpunktnahen elektrischen Zusatzheizung stellt.

7. Verfahren zur Regelung qualitätsbestimmender Parameter der Rauhschmelze von Glasschmelzwannen nach Anspruch 2, **dadurch gekennzeichnet, dass** bei Querflammen-Glasschmelzwannen ein nachgeordneter Regelkreis die Glasströmung im Unterofen durch eine Stellhandlung der Brennstoffverteilung auf die Ports verstärkt, indem der Quellpunktport und/oder Port 1 anteilig verstärkt mit Brennstoff beaufschlagt werden.

8. Verfahren zur Regelung qualitätsbestimmender Parameter der Rauhschmelze von Glasschmelzwannen nach Anspruch 4, **dadurch gekennzeichnet, dass** der Ausgang des Flammenlängeregelkreises eine Stellgröße ist, die die Flammenlänge durch den Zerstäubergasdruck von Ölbrennern sinninvertiert stellt.

9.  Verfahren zur Regelung qualitätsbestimmender Parameter der Rauhschmelze von Glasschmelzwannen nach Anspruch 4, **dadurch gekennzeichnet, dass** der Ausgang des Flammenlängeregelkreises eine Stellgröße ist, die die Flammenlänge durch unsymmetrische Brennstoffverteilung auf die Brenner eines Ports stellt, wobei die Verstärkung der Ungleichheit längere Flammen einstellt.

10. Verfahren zur Regelung qualitätsbestimmender Parameter der Rauhschmelze von Glasschmelzwannen nach den Ansprüchen 3 oder 4, **dadurch gekennzeichnet, dass** der Sollwert des Flammenlängenregelkreises als Führungsgröße vom Feuerführungsregelkreis geführt wird und dass sein Ausgang eine Stellgröße ist, die die Flammenlänge stellt.

11. Verfahren zur Regelung qualitätsbestimmender Parameter der Rauhschmelze von Glasschmelzwannen nach Anspruch 10, **dadurch gekennzeichnet, dass** der Sollwert des Flammenlängeregelkreises als Führungsgröße vom Feuerführungsregelkreis geführt wird und eine Störgrößenaufschaltung zur Grenzlängenüberwachung aufweist.

12. Verfahren zur Regelung qualitätsbestimmender Parameter der Rauhschmelze von Glasschmelzwannen nach einem oder mehreren der Ansprüche 1 bis 4" **dadurch gekennzeichnet, dass** die Messwertgewinnung der Istwerte durch Ofenraumbildauswertung erfolgt, wobei die Bildauswertung örtlich innerhalb eines Bildausschnittes ausgeführt wird, der die in der Kameraperspektive sichtbare Glasbadoberfläche einschließlich des aufschwimmenden Gemenges, aber ausschließlich der Oberofenseitenwände, umfasst.

13. Verfahren zur Regelung qualitätsbestimmender Parameter der Rauhschmelze von Glasschmelzwannen nach Anspruch 3 oder 4, **dadurch gekennzeichnet, dass** zur Messwertgewinnung der Istwerte durch Ofenraumbildauswertung die Bildauswertung zeitlich in der Feuerperiode und örtlich innerhalb eines Bildausschnittes ausgeführt wird, der den in der Kameraperspektive sichtbaren Oberofenraum umfasst und dass die Zuordnung eines Flammentemperaturfeldes zu einer Flamme durch einen Symmetrievergleich mit einer im Bild vorgewählten Flammenachse ausgeführt wird.

14. Verfahren zur Regelung qualitätsbestimmender Parameter der Rauhschmelze von Glasschmelzwannen nach Anspruch 12, **dadurch gekennzeichnet, dass** innerhalb des Bildausschnittes die perspektivische Verkürzung von Abständen zwischen den Zeilen und Spalten der Bildmatrix korrigiert wird durch eine Wichtung der Bildpunkte, die proportional dem Quadrat des Abstandes zwischen zugehörigem realen Objekt und Objektiv der Bildaufnahmeeinrichtung ist.

15. Verfahren zur Regelung qualitätsbestimmender Parameter der Rauhschmelze von Glasschmelzwannen nach Anspruch 12, **dadurch gekennzeichnet, dass** innerhalb des Bildausschnittes die perspektivische Verkürzung von Abständen ausschließlich zwischen den Zeilen der Bildmatrix korrigiert wird, indem jeder Bildpunktzeile im Bildausschnitt einmalig ein Winkel $\alpha$ zwischen der Längsachse der Wanne in der Glasbadebene und dem Objektiv der Bildaufnahmeinrichtung zugeordnet wird und der perspektivische Korrekturfaktor hierbei 1 :cos $\alpha$ ist.

16. Verfahren zur Regelung qualitätsbestimmender Parameter der Rauhschmelze von Glasschmelzwannen nach Anspruch 12, **dadurch gekennzeichnet, dass** in einem Bildausschnitt, der näherungsweise die Glasbadoberfläche der Schmelzzone einer Glasschmelzwanne umfasst, eine Gemengebedeckung ermittelt wird als Summe der Oberflächen der Gemengeschollen und dass der Quotient der Gemengefläche bezogen auf die konstante Glasbadoberfläche der Glasschmelzwanne die Gemengebedeckung ist.

17. Verfahren zur Regelung qualitätsbestimmender Parameter der Rauhschmelze von Glasschmelzwannen nach Anspruch 12, **dadurch gekennzeichnet, dass** in dem festgelegten Bildausschnitt die linearisierte Zunahme einer Gemengebedeckung im Gebiet der treibenden Gemengeschollen bestimmt wird, indem mittels Bildauswertung die Fläche der losen Gemengebedeckung als ein Feld der Zeilen bestimmt wird, das Bildpunkte sowohl in einer mit Helligkeitswerten kriteriell unterschiedenen Hellklasse als auch in der alternativen Dunkelklasse aufweist, zeilenweise ein Quotient von Anzahl der Dunkelbildpunkte zur Anzahl der Zeilenpunkte bestimmt wird und der linearisierte Anstieg der Gemengebedeckung bestimmt wird und die Anstiegskonstante der Gemengebedeckung als eine Funktion der Bildzeilennummer, in Längsachse der Wanne und entgegen der Entnahmeströmung, die Kennzahl des Impulses des Rezirkulationsstromes und die Eingangsmessgröße des Batchdriftregelkreises ist.

18. Verfahren zur Regelung qualitätsbestimmender Parameter der Rauhschmelze von Glasschmelzwannen nach Anspruch 16 oder 17, **gekennzeichnet dadurch, dass** der kriterielle Schwellwert der Helligkeit von Bildpunkten aus dem Mittelwert der Helligkeit der ersten Bildzeile, am Fuß des Bildausschnittes und dem Mittelwert der Helligkeit der letzten Bildzeile gebildet wird.

**19.** Verfahren zur Regelung qualitätsbestimmender Parameter der Rauhschmelze von Glasschmelzwannen nach Anspruch 16 oder 17, **dadurch gekennzeichnet, dass** die Blickrichtungsachse so ausgerichtet ist, dass sie mit der Höhe des Bildausschnittes und der Wannenlängsachse annähernd eine gemeinsame senkrechte Ebene zur Glasspiegelebene bildet und dass die auf Senkrechten zur Blickrichtungsachse befindlichen Bildpunkte die Auswertungsbildzeilen sind und dass die Nummerierung der Auswertungsbildzeilen von der Basis des Bildausschnittes her aufsteigenden Sinn hat.

**20.** Verfahren zur Regelung qualitätsbestimmender Parameter der Rauhschmelze von Glasschmelzwannen nach Anspruch 16 oder 17, **gekennzeichnet dadurch, dass** der kriterielle Schwellwert der Helligkeit ersetzt ist durch die Intensität insbesondere der Farben blau, rot und grün, wobei kleine Beträge rot einschmelzendes Gemenge und/ oder kaltes Gemenge anzeigen und kleine Werte grün dabei kaltes Gemenge signalisieren.

**21.** Verfahren zur Regelung qualitätsbestimmender Parameter der Rauhschmelze von Glasschmelzwannen nach Anspruch 20, **dadurch gekennzeichnet, dass** die kriteriellen Schwellwerte der Intensität für blau, grün und rot gebildet sind aus ihrem jeweiligen Mittelwert der Mittelwerte von erster und letzter Zeile.

**22.** Verfahren zur Regelung qualitätsbestimmender Parameter der Rauhschmelze von Glasschmelzwannen nach einem oder mehreren der Ansprüche 14 bis 17, **dadurch gekennzeichnet, dass** die Gemengebedeckung eine realitätsbezogene Fläche **dadurch** ist, dass ein Quotient gebildet wird von der Anzahl der dunklen Bildpunkte im Bildausschnitt mit ihrer Wichtung, bezogen auf die Anzahl aller Bildpunkte im Bildausschnitt, einschließlich ihrer Wichtung.

**23.** Verfahren zur Regelung qualitätsbestimmender Parameter der Rauhschmelze von Glasschmelzwannen nach Anspruch 4 oder 11, **dadurch gekennzeichnet, dass** die Grenzlängenüberwachung der Flamme in der Feuerpause im Anschluss an die abgasführende Periode auf der zuvor abziehenden Ofenseite **dadurch** ausgeführt ist, dass der Vergleich der Mittelwerte der Helligkeit zweier Bildausschnitte geführt wird, wobei ein Bildausschnitt die Kanten des Portmaules des zuvor abgasabziehenden Ports umfasst und der zweite Vergleichsbildausschnitt ein äußeres Umgebungsfeld des erstgenannten Bildausschnitts ist, ausschließlich des erstgenannten Bildausschnittes selbst, und dass Überschreitung einer Toleranzobergrenze ein Störsignal der Grenzlängenüberwachung der Flamme setzt.

**24.** Verfahren zur Regelung qualitätsbestimmender Parameter der Rauhschmelze von Glasschmelzwannen nach Anspruch 4, **dadurch gekennzeichnet, dass** die Messung zeitlich in der Pause des Feuerseitenwechsels erfolgt.

**Claims**

**1.** Method for regulation of quality-determining parameters of the rough melt in glass-melting furnaces, **characterised by** regulation of the optically measured proportion and the distribution of the batch coverage of the glass bath surface as an actual value input, with a predetermined degree of batch coverage as the set value and the total energy supply and/or energy distribution as the output.

**2.** Method for regulation of quality-determining parameters of the rough melt in glass-melting furnaces according to claim 1, **characterised by** intensity regulation of the main recirculation return flow of the glass which is near the surface, said intensity regulation being afforded by way of axial repulsion of the batch advancing in lump-wise manner, wherein the optically measured gradient of the degree of batch coverage in the direction of the longitudinal axis of the furnace tank is an actual value for a batch drift regulating circuit which is compared with a predetermined effective value of the numerical rise in batch coverage which serves as the set value of the batch drift regulating circuit, the batch drift regulating circuit being subordinate to an overall fuel regulating circuit and the output of which is the control parameter of a subsequent regulating circuit which indirectly sets the flow of glass by the targeted input of heat in the lower furnace.

**3.** Method for regulation of quality-determining parameters of the rough melt in glass-melting furnaces according to claim 1, which melt is recognisable in transverse flame glass-melting furnaces by way of lateral V-shaped repulsion of batch advancing in lump-wise manner, **characterised by** intensity regulation of the transverse recirculation flow of the glass which is near the surface, wherein the position axially of the flame of the optically measured focal point of a local hotspot is regulated in a flame track on the surface of the glass, which is the actual value input of a firing control regulating circuit, the preferred set value of which is the central position of the local hotspot of the flame track in the transverse direction of the furnace tank and the output of which is the control parameter of a subsequent regulating circuit which sets the flame length.

4. Method for regulation of quality-determining parameters of the rough melt in glass-melting furnaces according to claim 3, **characterised by** regulation of an actual value which is the optically measured position of the focal point of a flame temperature field of each combustion air port, wherein the regulating circuit is a flame length regulating circuit with a set value which is the flame hotspot position on the flame axis.

5. Method for regulation of quality-determining parameters of the rough melt in glass-melting furnaces according to claim 2, **characterised in that** a subsequent regulating circuit sets the glass flow in the lower furnace by a setting action, in the same direction, of the bubbling effect near the source point.

6. Method for regulation of quality-determining parameters of the rough melt in glass-melting furnaces according to claim 2, **characterised in that** a subsequent regulating circuit sets the glass flow in the lower furnace by a setting action, in the same direction, of the additional electrical heating effect near the source point.

7. Method for regulation of quality-determining parameters of the rough melt in glass-melting furnaces according to claim 2, **characterised in that** in the case of transverse flame glass-melting furnaces a subsequent regulating circuit increases the glass flow in the lower furnace by setting of the fuel distribution to the ports by a procedure whereby the source point port and/or port 1 are proportionately increasedly supplied with fuel.

8. Method for regulation of quality-determining parameters of the rough melt in glass-melting furnaces according to claim 4, **characterised in that** the output of the flame length regulating circuit is a setting parameter which in inverted sense sets the flame length by the atomiser gas pressure from oil burners.

9. Method for regulation of quality-determining parameters of the rough melt in glass-melting furnaces according to claim 4, **characterised in that** the output of the flame length regulating circuit is a setting parameter which sets the flame length by asymmetrical fuel distribution to the burners of a port, wherein the increase in the degree of inequality sets longer flames.

10. Method for regulation of quality-determining parameters of the rough melt in glass-melting furnaces according to claim 3 or claim 4, **characterised in that** the set value of the flame length regulating circuit is passed as a control parameter from the firing control regulating circuit and **in that** its output is a setting parameter which sets the flame length.

11. Method for regulation of quality-determining parameters of the rough melt in glass-melting furnaces according to claim 10, **characterised in that** the set value of the flame length regulating circuit is passed as a control parameter from the firing control regulating circuit and has a disturbance variable forward-feed means for limit length monitoring.

12. Method for regulation of quality-determining parameters of the rough melt in glass-melting furnaces according to one or more of claims 1 to 4, **characterised in that** the measurement actual values are obtained by furnace chamber image evaluation, image evaluation being executed locally within an image section which includes the glass bath surface visible in the camera perspective including the floating batch but excluding the upper furnace side walls.

13. Method for regulation of quality-determining parameters of the rough melt in glass-melting furnaces according to either claim 3 or claim 4, **characterised in that** for obtaining the measurement actual values by furnace chamber image evaluation, image evaluation is executed in respect of time in the firing period and locally within an image section which includes the upper furnace chamber visible in the camera perspective, and **in that** the association of a flame temperature field with a flame is effected by symmetry comparison with a flame axis which is preselected in the image.

14. Method for regulation of quality-determining parameters of the rough melt in glass-melting furnaces according to claim 12, **characterised in that** within the image section the perspective reduction in spacings between the lines and columns of the image matrix is corrected by weighting of the pixels, which is proportional to the square of the spacing between the associated real object and the objective of the image recording means.

15. Method for regulation of quality-determining parameters of the rough melt in glass-melting furnaces according to claim 12, **characterised in that** within the image section the perspective reduction in spacings is corrected exclusively between the lines of the image matrix by a procedure in which an angle $\alpha$ between the longitudinal axis of the furnace tank in the plane of the glass bath and the objective of the image recording means is associated once in the image section with each pixel line and the perspective correction factor is in this case 1:cos $\alpha$.

16. Method for regulation of quality-determining parameters of the rough melt in glass-melting furnaces according to claim 12, **characterised in that** in an image section which approximately includes the glass bath surface of the melting zone of a glass melting furnace, a batch coverage is ascertained as the sum of the surfaces of the batch lumps, and **in that** the quotient of the batch surface with respect to the constant glass bath surface of the glass melting furnace is the batch coverage.

17. Method for regulation of quality-determining parameters of the rough melt in glass-melting furnaces according to claim 12, **characterised in that** in the established image section the linearised increase in a level of batch coverage is determined in the region of the driving batch lumps by a procedure whereby by means of image evaluation the surface area of the loose batch coverage is determined as a field of the lines, which has pixels both in a light class which is distinguished by brightness values as a criterion and also in the alternative dark class, a quotient of the number of the dark pixels to the number of the line points is determined line-wise and the linearised increase in batch coverage is determined and the rise constant in respect of batch coverage as a function of the image line number, on the longitudinal axis of the furnace tank and in opposite relationship to the removal flow, is the characteristic number of the pulse of the recirculation flow and the input measurement parameter of the batch drift regulating circuit.

18. Method for regulation of quality-determining parameters of the rough melt in glass-melting furnaces according to either claim 16 or claim 17, **characterised in that** the threshold value as a criterion in respect of the brightness of pixels is formed from the mean value of the brightness of the first image line, at the foot of the image section, and the mean value of the brightness of the last image line.

19. Method for regulation of quality-determining parameters of the rough melt in glass-melting furnaces according to either claim 16 or claim 17, **characterised in that** the axis of the viewing direction is so oriented that with the height of the image section and the furnace tank longitudinal axis it forms approximately a common perpendicular plane with respect to the plane of the surface of the glass and **in that** the pixels on perpendiculars to the axis of the viewing direction are the evaluation image lines and **in that** the numbering of the evaluation image lines is in a direction rising from the base of the image section.

20. Method for regulation of quality-determining parameters of the rough melt in glass-melting furnaces according to either claim 16 or claim 17, **characterised in that** the criterion threshold value of brightness is replaced by the intensity in particular of the colours blue, red and green, wherein small amounts of red indicate melting batch and/or cold batch and small values of green **in that** respect signal cold batch.

21. Method for regulation of quality-determining parameters of the rough melt in glass-melting furnaces according to claim 20, **characterised in that** the criterion threshold values in respect of the intensity for blue, green and red are formed from their respective mean value of the mean values of the first and last lines.

22. Method for regulation of quality-determining parameters of the rough melt in glass-melting furnaces according to one or more of claims 14 to 17, **characterised in that** batch coverage is a reality-related surface area, **in that** a quotient is formed from the number of dark pixels in the image section with the weighting thereof, with respect to the number of all pixels in the image section, including the weighting thereof.

23. Method for regulation of quality-determining parameters of the rough melt in glass-melting furnaces according to either claim 4 or claim 11, **characterised in that** limit length monitoring of the flame in the firing pause following the waste gas-conducting period on the previously withdrawing side of the furnace is effected **in that** the comparison of the mean values of the brightness of two image sections is implemented, wherein an image section includes the edges of the port mouth of the previously waste gas-withdrawing port and the second comparative image section is an outer surrounding area of the first-mentioned image section, excluding the first-mentioned image section itself, and **in that** the fact of exceeding a tolerance upper limit sets an interference signal in respect of flame limit length monitoring.

24. Method for regulation of quality-determining parameters of the rough melt in glass-melting furnaces according to claim 4, **characterised in that** the measurement operation is effected in respect of time in the pause in the firing side change.

**Revendications**

1. Procédé de régulation des paramètres déterminant pour la qualité du bain de verre de cuves de fusion de verre, **caractérisé par** la régulation de la partie mesurée optiquement et la répartition de la couverture de composition de la surface du bain de verre en tant qu'entrée de valeur réelle avec un degré de couverture de composition en tant que valeur de consigne et de l'alimentation en l'énergie totale et/ou répartition d'énergie en tant que sortie.

2. Procédé de régulation des paramètres déterminant pour la qualité du bain de verre de cuves de fusion de verre selon la revendication 1, **caractérisé par** une régulation d'intensité détectée par l'intermédiaire du repoussage axial de la composition avançant par plaques du reflux de recirculation principale proche de la surface du verre, dans lequel le gradient mesuré optiquement du degré de couverture de composition représente dans le sens de l'axe longitudinal de la cuve une valeur réelle pour le circuit de régulation de dérive par lots, qui est comparée à une valeur prédéterminée de l'accroissement numérique de la couverture de composition, qui est utilisée comme valeur de consigne du circuit de régulation de dérive par lots, dans lequel le circuit de régulation de dérive par lots est subordonné à un circuit de régulation de carburant total et présente en tant que sortie la valeur de référence d'un circuit de régulation suivant, qui place le flux de verre indirectement dans le four inférieur par l'intermédiaire d'un apport de chaleur approprié.

3. Procédé de régulation des paramètres déterminant pour la qualité du bain de verre de cuves de fusion de verre selon la revendication 1, qui est reconnaissable dans le cas de cuves de fusion de verre à brûleurs transversaux par un repoussage en forme de V de la composition avançant par plaques, **caractérisé par** une régulation de l'intensité du flux de recirculation transversal proche de la superficie du verre, dans lequel la position axiale à la flamme du centre de gravité mesurée optiquement d'un point chaud local est réglée dans une trace de flamme à la surface du verre, qui est l'entrée de valeur réelle d'un circuit de régulation de commande de feu, dont la valeur de consigne préférée est la position moyenne du point chaud local de la trace de flamme dans le sens transversal de la cuve et dont la sortie est la grandeur de référence d'un circuit de régulation suivant, qui règle la longueur de flamme.

4. Procédé de régulation des paramètres déterminant pour la qualité du bain de verre de cuves de fusion de verre selon la revendication 3, **caractérisé par** la régulation d'une valeur réelle, qui est la position mesurée optiquement du centre de gravité d'un champ de température de flamme du port d'air de combustion respectif, dans lequel le circuit de réglage est un circuit de réglage de longueur de flamme avec une valeur de consigne, qui est la position du point chaud de flamme dans un axe de flamme.

5. Procédé de régulation des paramètres déterminant pour la qualité du bain de verre de cuves de fusion de verre selon la revendication 2, **caractérisé en ce que** le circuit de régulation disposé en aval règle le flux de verre dans le four inférieur par un réglage de même sens du bouillonnage proche du point chaud.

6. Procédé de régulation des paramètres déterminant pour la qualité du bain de verre de cuves de fusion de verre selon la revendication 2, **caractérisé en ce qu'**un circuit de réglage disposé en aval règle le flux de verre dans le four inférieur par un réglage de même sens du chauffage auxiliaire électrique proche du point chaud.

7. Procédé de régulation des paramètres déterminant pour la qualité du bain de verre de cuves de fusion de verre selon la revendication 2, **caractérisé en ce que**, dans des cuves de fusion de verre à brûleurs transversaux, un circuit de réglage disposé en aval renforce le flux de verre dans le four inférieur par un réglage de la répartition de combustible sur les ports, où le port de point chaud et/ou le port 1 sont alimentés en combustible proportionnellement de façon renforcée.

8. Procédé de régulation des paramètres déterminant pour la qualité du bain de verre de cuves de fusion de verre selon la revendication 4, **caractérisé en ce que** la sortie du circuit de réglage de longueur de flamme est une valeur de réglage, qui règle dans le sens inverse la longueur de flamme par la pression de gaz de diffusion des brûleurs à fioul.

9. Procédé de régulation des paramètres déterminant pour la qualité du bain de verre de cuves de fusion de verre selon la revendication 4, **caractérisé en ce que** la sortie du circuit de régulation de longueur de flamme est une valeur de réglage, qui règle la longueur de flamme par la répartition non symétrique du combustible sur les brûleurs d'un port, où le renforcement de l'inégalité règle les plus longues flammes.

10. Procédé de régulation des paramètres déterminant pour la qualité du bain de verre de cuves de fusion de verre selon la revendication 3 ou 4, **caractérisé en ce que** la valeur de consigne du circuit de réglage de longueur de flamme est donnée comme valeur de référence par le circuit de réglage de commande de feu et **en ce que** sa sortie est une valeur de réglage, qui règle la longueur de flamme.

11. Procédé de régulation des paramètres déterminant pour la qualité du bain de verre de cuves de fusion de verre selon la revendication 10, **caractérisé en ce que** la valeur de consigne du circuit de régulation de longueur de flamme est donnée comme valeur de référence par le circuit de réglage de commande de feu et présente l'émission d'un signal de perturbation pour une surveillance de la longueur de limite.

12. Procédé de régulation des paramètres déterminant pour la qualité du bain de verre de cuves de fusion de verre selon l'une ou plusieurs des revendications 1 à 4,
**caractérisé en ce que** l'extraction de la valeur de mesure des valeurs réelles se produit par évaluation de l'espace du four, où l'évaluation de l'image est réalisée localement à l'intérieur d'un gros plan de l'image, qui comprend la surface du bain de verre visible dans la perspective de la caméra à l'intérieur de la composition flottante mais également à l'extérieur des parois latérales du four supérieur.

13. Procédé de régulation des paramètres déterminant pour la qualité du bain de verre de cuves de fusion de verre selon la revendication 3 ou 4, **caractérisé en ce que**, pour l'extraction de la valeur de mesure des valeurs réelles par évaluation de l'espace du four, l'évaluation de l'image est réalisée temporellement pendant une période de feu et localement à l'intérieur d'un gros plan de l'image, qui comprend l'espace du four supérieur visible dans la perspective de la caméra et **en ce que** l'affectation d'un champ de température de flamme à une flamme est réalisée par comparaison symétrique avec un axe de flamme présélectionné dans l'image.

14. Procédé de régulation des paramètres déterminant pour la qualité du bain de verre de cuves de fusion de verre selon la revendication 12, **caractérisé en ce que**, à l'intérieur du gros plan, le raccourcissement dû à la perspective des distances entre les lignes et les colonnes de la matrice d'image est corrigé par une pondération des points d'image, qui est proportionnelle au carré de la distance entre l'objet réel associé et l'objectif de l'installation de prises de vue.

15. Procédé de régulation des paramètres déterminant pour la qualité du bain de verre de cuves de fusion de verre selon la revendication 12, **caractérisé en ce que**, à l'intérieur du gros plan, le raccourcissement dû à la perspective des distances excepté entre les lignes de la matrice d'image est corrigé, où à chaque ligne de points d'image dans le gros plan est associé une fois un angle $\alpha$ entre l'axe longitudinal de la cuve dans la zone de bain de verre et l'objectif de l'installation de prises de vue et le facteur de correction de perspective est ici $1:\cos\alpha$.

16. Procédé de régulation des paramètres déterminant pour la qualité du bain de verre de cuves de fusion de verre selon la revendication 12, **caractérisé en ce que**, dans un gros plan, qui comprend approximativement la surface du bain de verre de la zone de fusion d'une cuve de fusion de verre, une couverture de composition est détectée en tant que somme des superficies des plaques de composition et **en ce que** le quotient de la surface de composition par rapport à la surface du bain de verre constante de la cuve de fusion de verre est la couverture de composition.

17. Procédé de régulation des paramètres déterminant pour la qualité du bain de verre de cuves de fusion de verre selon la revendication 12, **caractérisé en ce que**, dans le gros plan défini, l'augmentation linéarisée d'une couverture de composition est déterminée dans la zone des plaques de composition avançant, où, au moyen de l'évaluation d'image, la surface de la couverture de composition meuble est déterminée sous la forme d'un champ de lignes, qui présente des points d'image non seulement dans une classe claire se différenciant de façon critérielle par des valeurs de luminosité mais également dans la classe sombre alternative, ligne par ligne un quotient du nombre de points d'image sombres est déterminé pour un nombre de points de ligne et l'augmentation linéarisée de la couverture de composition est déterminée et la constante d'augmentation de la couverture de composition en tant que fonction du nombre de lignes d'image, dans l'axe longitudinal de la cuve et contre le flux de prise, est le chiffre de l'impulsion du courant de recirculation et la grandeur de mesure d'entrée du circuit de régulation de dérive par lots.

18. Procédé de régulation des paramètres déterminant pour la qualité du bain de verre de cuves de fusion de verre selon la revendication 16 ou 17, **caractérisé en ce que** la valeur de seuil critérielle de la luminosité des points d'image est formée à partir de la valeur moyenne de la luminosité de la première ligne d'image, en bas du gros plan et de la valeur moyenne de la luminosité de la dernière ligne d'image.

**19.** Procédé de régulation des paramètres déterminant pour la qualité du bain de verre de cuves de fusion de verre selon la revendication 16 ou 17, **caractérisé en ce que** l'axe de direction de visée est orienté de sorte qu'il forme avec la hauteur du gros plan et l'axe longitudinal de la cuve approximativement un plan vertical commun au plan miroir du verre et **en ce que** les points d'image se trouvant sur la verticale par rapport à l'axe de direction de visée sont les lignes d'image d'évaluation et **en ce que** la numérotation des lignes d'image d'évaluation présente un sens ascendant depuis la base du gros plan.

**20.** Procédé de régulation des paramètres déterminant pour la qualité du bain de verre de cuves de fusion de verre selon la revendication 16 ou 17, **caractérisé en ce que** la valeur de seuil critérielle de la luminosité est remplacée par l'intensité en particulier des couleurs bleu, rouge et vert, où de petites valeurs rouges représentent une composition en fusion et/ou une composition froide et les petites valeurs vertes signalent une composition froide.

**21.** Procédé de régulation des paramètres déterminant pour la qualité du bain de verre de cuves de fusion de verre selon la revendication 20, **caractérisé en ce que** les valeurs de seuil critérielles de l'intensité pour le bleu, le vert et le rouge sont formées à partir de leur valeur moyenne respective des valeurs moyennes des première et dernière lignes.

**22.** Procédé de régulation des paramètres déterminant pour la qualité du bain de verre de cuves de fusion de verre selon l'une ou plusieurs des revendications 14 à 17, **caractérisé en ce que** la couverture de composition est une surface réaliste **en ce qu'**un quotient est formé par le nombre de points d'image sombres dans le gros plan avec leur pondération, par rapport au nombre de tous les points d'image dans le gros plan, y compris leur pondération.

**23.** Procédé de régulation des paramètres déterminant pour la qualité du bain de verre de cuves de fusion de verre selon la revendication 4 ou 11, **caractérisé en ce que** la surveillance de la longueur de limite des flammes est réalisée au cours de la pause de feu en relation avec la période d'évacuation des gaz sur le côté du four préalablement enlevée, **en ce que** la comparaison des valeurs moyennes de la luminosité de deux gros plans est effectuée, où un gros plan comprend les bords de l'ouverture du port du port où les fumées ont été extraites auparavant et le second gros plan de comparaison est un champ environnant extérieur du gros plan précité, à l'exception du gros plan précité lui-même, et **en ce que** le dépassement d'une limite supérieure de tolérance déclenche un signal parasite de la surveillance de longueur de limite des flammes.

**24.** Procédé de régulation des paramètres déterminant pour la qualité du bain de verre de cuves de fusion de verre selon la revendication 4, **caractérisé en ce que** la mesure est effectuée temporairement pendant la pause du changement de côté de feu.

EP 1 458 649 B1

**Fig. 1**

Fig. 2

Fig. 3

Fig. 4

10    8    6    12    11    7    5    9

Port 1   Port 2   Port 3   Port 4   Port 5   Port 6

Fig. 5

# Fig. 6